# EUROPEAN PATENT SPECIFICATION

(11) **EP 4 245 808 B1**
(45) Date of publication and mention of the grant of the patent: **29.07.2026**
(21) Application number: 22902505.1
(22) Date of filing: 19.12.2022
(51) Int. Cl.: C08L 83/07, C08L 83/05, C08K 3/22, C08K 3/36, C08K 3/04, B33Y 70/10

(54) **SINGLE-COMPONENT SILICA GEL MEDIUM SUITABLE FOR DIRECT-INK-WRITING-TYPE 3D PRINTING, AND PREPARATION METHOD THEREFOR AND USE THEREOF**
EINKOMPONENTIGES KIESELGELMEDIUM FÜR 3D-DRUCK MIT DIREKTEM TINTENDRUCK, HERSTELLUNGSVERFAHREN UND ANWENDUNG DAVON
MILIEU DE GEL DE SILICE À UN SEUL CONSTITUANT APPROPRIÉ POUR UNE IMPRESSION 3D DE TYPE À ÉCRITURE DIRECTE D'ENCRE, SON PROCÉDÉ DE PRÉPARATION ET SON UTILISATION

(30) Priority: 21.01.2022 CN 202210069440
(43) Date of publication of application: 20.09.2023
(73) Proprietor: ENOVATE3D (HANGZHOU) TECHNOLOGY DEVELOPMENT CO., LTD., Hangzhou, Zhejiang 310051 (CN)
(72) Inventor: ZHOU, Nanjia, Hangzhou, Zhejiang 310051 (CN); LI, Shen, Hangzhou, Zhejiang 310051 (CN); YAN, Junqiu, Hangzhou, Zhejiang 310051 (CN); ZHU, Xiaoyan, Hangzhou, Zhejiang 310051 (CN); CHEN, Xiaopeng, Hangzhou, Zhejiang 310051 (CN)
(74) Representative: Fezzardi, Antonio
(86) International application number: PCT/CN2022/139958
(87) International publication number: WO 2023/138279

(56) References cited:
- WO-A1-2021/134433
- WO-A1-2021/134433
- WO-A1-2021/134481
- WO-A1-2022/008721
- CN-A- 107 428 073
- CN-A- 107 793 582
- CN-A- 108 025 494
- CN-A- 109 810 516
- CN-A- 110 128 833
- CN-A- 113 166 539
- CN-A- 113 166 539
- CN-A- 114 350 158
- CN-A- 114 381 127
- CN-A- 114 437 548
- CN-A- 114 901 726
- CN-A- 114 929 807
- US-A1- 2021 395 525

## Description

### TECHNICAL FIELD

The present disclosure relates to the field of material preparation, in particular to a single-component silica gel medium suitable for direct ink writing 3D printing, a preparation method and application thereof.

### BACKGROUND ART

3D printing, as a new precision processing and manufacturing technology, is featured in an additive manufacturing process developed from nothing in the manufacturing process, which is different from a subtractive manufacturing process as the traditional process, in which redundant materials tend to be subtracted gradually until no materials are available. Compared with the traditional manufacturing process, the 3D printing technology featuring additive manufacturing has higher flexibility and practicability. At present, common 3D printing technologies include fused deposition modeling (FDM), stereo lithography appearance (DLP (digital light processing), CLIP (continuous liquid interface production), or PolyJet), selective laser sintering (SLA and SLS), three-dimensional printing (3DP), and the like, however, none of these 3D printing technologies is made available to the printing of precision structures with silica gel media.

Direct ink writing (DIW) printing, as an emerging 3D printing technology, has been widely applied in electronic devices, structural materials, histological engineering, soft robotics, and other fields by extruding semisolid ink materials with shear thinning properties out of a printer head and stacking them layer upon layer to constitute a preliminarily designed three-dimensional structure. At present, this technology may fit very happily with silica gel medium materials in the precision processing of products.

Technologies for researching silica gel printing media are also provided in the prior art, for example, CN105643939B and CN107674429A have disclosed 3D printing silica gel and a printing method thereof, respectively. However, single-component silica gel materials therefor have a short storage cycle and may pose the risk of being susceptible to the blockage of the printer head resulting from thickening, gelling or coarse particles during printing. CN106313505A and CN107638231A have disclosed a two-component mixed silica gel 3D printer and a printing method thereof, in which no specific technical details of two-component mixed silica gel were disclosed, and the temperature of annular heating sheets is as high as 100°C to 400°C during printing, which results in the blockage of the printer head due to gelling of the silica gel therein at high temperature.

CN113166539A and WO2021/134433A1 both disclose silicone compositions for additive manufacture comprising vinyl-terminated polysiloxane, hydrogen-functional polysiloxane, platinum catalyst, silica, ethynyl-1-cyclohexanol inhibitor and polydimethylsiloxane.

In summary, at present, no silica gel materials which may be well adapted to direct ink writing 3D printing are available in the market, which, in turn, poses a limit to the market promotion and application of 3D printing technologies.

### SUMMARY

### TECHNICAL PROBLEM

In the prior art, 3D printing silica gel has a short storage cycle and may pose the risk of being susceptible to the blockage of the printer nozzle resulting from thickening, gel (high temperature) or coarse particles during printing.

The present disclosure aims to provide a single-component silica gel medium suitable for direct ink writing 3D printing, a preparation method and application thereof. The single-component silica gel medium is suitable for the high-precision printing of micron-sized lines, with the combination of high viscosity and stability.

### SOLUTIONS TO PROBLEMS

### TECHNICAL SOLUTIONS

In order to fulfill the above objective, in the first embodiment, the present disclosure provides a single-component silica gel medium suitable for a direct ink writing 3D printing process. A viscosity of the single-component silica gel medium is 200 to 1000 Pa·s, and a viscosity change value is smaller than or equal to 10% after the single-component silica gel medium is stored at room temperature for more than 30 days.

In some embodiments, a cone penetration of the single-component silica gel medium is 120 to 280 * 0.1 mm at 25°C.

The single-component silica gel medium suitable for the direct ink writing 3D printing process is prepared by a preparation method, including the following steps of S1, mixing polysiloxane containing carbon-carbon double bonds, a tackifier, and a platinum catalyst to obtain a first mixture; S2, heating the first mixture and holding for first time, adding a polymerization inhibitor and holding for second time to obtain a second mixture; S3, cooling the second mixture, and mixing the second mixture with hydrogen-containing polysiloxane to obtain a third mixture; S4, mixing the third mixture with an inorganic nano-filler to obtain a fourth mixture; and S5, performing vacuum defoamation and filtration under pressure on the fourth mixture sequentially to obtain the single-component silica gel medium.

In the second embodiment, the present disclosure provides a preparation method of a single-component silica gel medium suitable for a direct ink writing 3D printing process, including the following steps:
S1: mixing polysiloxane containing carbon-carbon double bonds, a tackifier, and a platinum catalyst to obtain a first mixture;
S2: heating the first mixture and holding for first time, and adding a polymerization inhibitor to the first mixture and holding for second time to obtain a second mixture;
S3, cooling the second mixture, and mixing the second mixture with hydrogen-containing polysiloxane to obtain a third mixture;
S4, mixing the third mixture with an inorganic nano-filler to obtain a fourth mixture; and
S5, performing vacuum defoamation and filtration under pressure on the fourth mixture sequentially to obtain the single-component silica gel medium.

In step S1, the polysiloxane containing carbon-carbon double bonds and the tackifier are mixed and cross-linked at an appropriate temperature under an action of the platinum catalyst to form a reticular cross-linked polymer, and thus, the first mixture obtained in step S1 is the reticular cross-linked polymer, which is advantageous in that the obtained first mixture can maintain a good shape retention during printing under an intrinsic reticular frame. This can prevent printed lines from collapsing due to leveling, thereby obtaining a pattern with a height-width ratio larger than 0.5.

In this cross-linking reaction, the polysiloxane containing carbon-carbon double bonds is mixed as a primary component. The polysiloxane, the tackifier, and the platinum catalyst are mixed at the following ratio: the amount of the polysiloxane is 200 to 2000 times as large as that of the catalyst, and is 2 to 10 times as large as that of the tackifier. In some embodiments, the ratio of the polysiloxane to the tackifier to the catalyst is 100: 10-50: 0.05-0.5. Preferably, the ratio of the polysiloxane to the tackifier to the catalyst is 100: 30: 0.1; and the ratio of the polysiloxane to the tackifier to the catalyst is 100: 20: 0.3.

The polysiloxane containing carbon-carbon double bonds is selected from at least one of vinyl polysiloxane, methylvinyl polysiloxane, and methylphenylvinyl polysiloxane. In the case that the polysiloxane containing carbon-carbon double bonds is the vinyl polysiloxane, vinyl of the vinyl polysiloxane sits at an alpha, omega or middle position of a polysiloxane molecular chain, a viscosity of the vinyl polysiloxane is 50 to 500 Pa·s, a vinyl content is 0.05 to 10 mol%, every molecule in the vinyl polysiloxane contains more than two vinyl functional groups linked with silicon atoms, and a molecular weight is (40-100)*10⁴.

The platinum catalyst is prepared from chloroplatinic acid or at least one of complexes formed by the chloroplatinic acid and alkene, cycloalkane, alcohol, ester, ketone and ether, and preferably, is a Speier platinum catalyst or a Karstedt platinum catalyst with the platinum metal content of 0.1-5%, and a mass fraction of the catalyst added to the medium material is 0.1-0.5%.

The tackifier is selected from one or more of HO-Si(CH₃)₂O[Si(CH₃)₂O]ₙSi(CH₃)₂-OH (n=3 to 8), hexamethylcyclotrisiloxane (D3), octamethyl cyclotetrasiloxane (D4), decamethylcyclopentasiloxane (D5), and a dimethylsiloxane cyclic mixture (DMC).

In step S2, the first mixture is heated to 50°C to 80°C. The first mixture is stabilized at any temperature of 50°C to 80°C for first time, which facilitates a cross-linking reaction between the tackifier and the polysiloxane containing carbon-carbon double bonds to improve a degree of cross-linking of the material, thereby boosting the integrated viscosity and shape retention of the final material, wherein the first time ranges from 30 to 180 minutes, which may be 40/50/60/70/80/90/100/110 minutes; and the first mixture may also be stabilized at 60°C/70°C.

The polymerization inhibitor added in step S2 may effectively inhibit the activity of the platinum catalyst to further stop the cross-linking reaction of the first mixture. The material that keeps stabilized at room temperature is obtained, which further improves the stability of the final single-component silica gel medium. The silica gel medium is not polymerized at room temperature in the presence of the polymerization inhibitor. The silica gel medium may be further polymerized only after the polymerization inhibitor is volatilized at a higher temperature and after the catalytic activity of the platinum catalyst is recovered, thereby finally achieving thermocuring. This is, the second mixture is added with the polymerization inhibitor compared with the first mixture to ensure that the silica gel medium may still maintain the high stability at room temperature on the premise of the high shape retention.

The polymerization inhibitor is alkynol having less than 15 carbon atoms, and preferably, is selected from one or more of 1-ethynyl-1-cyclohexanol, 2-methyl-3-butyn-2-ol, propargyl alcohol, 3-butyn-1-ol and 3,5-dimethyl-1-hexyne-3-ol, and the mass fraction of the inhibitor added to the medium material is 0.1 to 2%.

In step S3, the addition of the hydrogen-containing polysiloxane may achieve the effect of improving the degree of polymerization to which the material is cured and the final hardness of the cured material. In addition, the addition of the hydrogen-containing polysiloxane in step S3 may also ensure that the catalytic effect of the platinum catalyst on the hydrogen-containing polysiloxane is higher.

In the embodiments of the present disclosure, the amount of the hydrogen-containing polysiloxane is 1 to 10 times as much as that of the polysiloxane containing carbon-carbon double bonds. That is, a ratio of the polysiloxane containing carbon-carbon double bonds to the hydrogen-containing polysiloxane is 100: 10-100. In some preferred embodiments, a ratio of the polysiloxane containing carbon-carbon double bonds to the hydrogen-containing polysiloxane is 1: 2.

The hydrogen-containing polysiloxane is selected from at least one of hydrogen-containing methylpolysiloxane, hydrogen-containing methylphenylpolysiloxane, hydrogen-containing methyl silicone resin, and hydrogen-containing phenyl silicone resin, wherein a viscosity of the hydrogen-containing polysiloxane is 50 to 500 Pa·s, a hydrogen content is 0.1 to 1 mol%; and every molecule in the hydrogen-containing polysiloxane contains more than two hydrogen atoms linked with the silicon atoms, and a molecular weight is (40-100)*10⁴.

In step S3, the second mixture is cooled to 20°C to 40°C, which may be 25°C/30°C/35°C.

In step S4, the inorganic nano-filler is added to the third mixture for the purpose of improving the shearing stress of the material to boost the stability of extrusion during printing.

The inorganic nano-filler is selected from one or more of silicon dioxide, calcium silicate, calcium carbonate, titanium dioxide, carbon black, graphene and zinc oxide, with a size ranging from 1 to 500 nm.

A mixed means provided by the present disclosure may be one or more of ball milling, grinding, or mechanical stirring, which is sufficient to ensure the uniform mixing of the mixed materials.

In the third embodiment, the present disclosure provides application of the single-component silica gel medium prepared according to the preparation method in direct ink writing 3D printing, in which a printed line width is 1 to 200 µm. As a result, the single-component silica gel medium is applicable to the printing of a line with a height-width ratio larger than 0.5.

### BENEFICIAL EFFECTS OF THE PRESENT DISCLOSURE

### BENEFICIAL EFFECTS

Compared with the prior art, the technical solution has the following characteristics and beneficial effects:
1. The intrinsic viscosity of the single-component silica gel medium may be as high as 200 to 1000 Pa·s, which can ensure the printed product has the high shape retention and is free of line collapse during curing to further meet the high-precision printing of the micron-sized line, with the printed line width ranging from 1 to 200µm. The single-component silica gel medium is applicable to the printing of the line with the height-width ratio larger than 0.5. Different from the condition that the viscosity of the traditional medium material is boosted by filling micron-sized particles therein, the single-component silica gel medium of the present disclosure has the high intrinsic viscosity, which reduces the risk of blockage in the printer nozzle.
2. The single-component silica gel medium has the excellent stability after being stored for a long time. After the single-component silica gel medium is stored at room temperature for more than 30 days, the viscosity change value is smaller than or equal to 10%; and the cone penetration is 120-280 * 0.1 mm at 25°C, and the change value is smaller than or equal to 10% within 30 days, so that the single-component silica gel medium is applicable to the long-term 3D printing with the combination of high viscosity and stability.
3. According to the present disclosure, the platinum catalyst is added during the preparation of the single-component silica gel medium to perform cross-linking treatment on the medium material at an appropriate temperature, and meanwhile, the polymerization inhibitor is introduced to inhibit the monomer from being further polymerized and cured, thereby ensuring the viscosity and storage stability of the material, while achieving full curing at high temperature, after which the shore hardness is more than 30A.

### BRIEF DESCRIPTION OF THE DRAWINGS

### DESCRIPTION OF THE DRAWINGS

FIG. 1 is a schematic diagram of a printed result according to Embodiment 1.
FIG. 2 is a three-dimensional structural diagram of a printed line width according to Embodiment 1.
FIG. 3 is a schematic diagram of a printed result according to Embodiment 2.
FIG. 4 is a three-dimensional structural diagram of a printed line width according to Embodiment 2.
FIG. 5 is a schematic diagram of a printed result according to Embodiment 3.
FIG. 6 is a three-dimensional structural diagram of a printed line width according to Embodiment 3.
FIG. 7 is a schematic diagram of a printed result according to Comparative Example 1.
FIG. 8 is a three-dimensional structural diagram of a printed line width according to Comparative Example 1.
FIG. 9 is a schematic diagram of a printed result according to Comparative Example 2.
FIG. 10 is a three-dimensional structural diagram of a printed line width according to Comparative Example 2.
FIG. 11 is a schematic diagram of a printed result according to Comparative Example 5.
FIG. 12 is a three-dimensional structural diagram of a printed line width according to Comparative Example 5.
FIG. 13 is a flow chart of a preparation method of a single-component silica gel medium suitable for a direct ink writing 3D printing process according to the present disclosure.

### DETAILED DESCRIPTION OF THE EMBODIMENTS

### DETAILED DESCRIPTION OF THE PRESENT DISCLOSURE

The technical solutions in the embodiments of the present disclosure will be clearly and completely described below with reference to the drawings in the embodiments of the present disclosure, and apparently, the described embodiments are merely part, rather than all of the embodiments of the present disclosure. All other embodiments derived by those ordinarily skilled in the art based on the embodiments given herein are intended to be within the scope of protection of the present disclosure.

It is understood that the terms "a" and "an" should be interpreted as "at least one" or "one or more", meaning that a number of one element may be one in one embodiment, while a number of the element may be plural in other embodiments, and the terms "a" and "an" should not be interpreted as limiting the number.

### Embodiment 1: Preparation of single-component silica gel medium (viscosity of 200 Pa·s):

(1) 100 g of vinyl polysiloxane having a viscosity of 50 Pa·s, a vinyl content of 0.05 mol%, and a molecular weight of 40 * 10⁴, 0.2 g of Karstedt platinum catalyst, 20 g of hexamethylcyclotrisiloxane (D3) are added to a stirred tank to be mixed evenly;
(2) the mixture is heated to 70°C and reacts for 30 minutes, 0.2 g of 1-ethynyl-1-cyclohexanol is added therein to be mixed evenly for a reaction for 30 minutes;
(3) the mixture is cooled to 30°C, 60 g of hydrogen-containing polysiloxane having a viscosity of 50 Pa·s, a hydrogen content of 0.1 mol%, and a molecular weight of 40 * 10⁴ is added to be mixed evenly with the mixture and stirred at a high speed for 30 minutes;
(4) 20 g of 20 to 30 nm hydrophobic fumed silica is added to be mixed evenly, and the mixture is transferred into a three-roller mill, and ground to a size smaller than 5 µm; and
(5) the ground mixture is transferred into the stirred tank for stirring at normal temperature and a vacuum degree smaller than 0.1 MPa for 2 hours, and is finally filtered under pressure to obtain a single-component silica gel medium having a viscosity of 200 Pa·s.

### Performance test:

The viscosity of the single-component silica gel medium is tested via a viscometer, which is 200 Pa·s. Cone penetrations for 30 days are tested using a cone penetrometer (25°C, and 0.1 mm), which are 276 (initial) and 278 (after 30 days) respectively. The material shows the excellent storage stability.

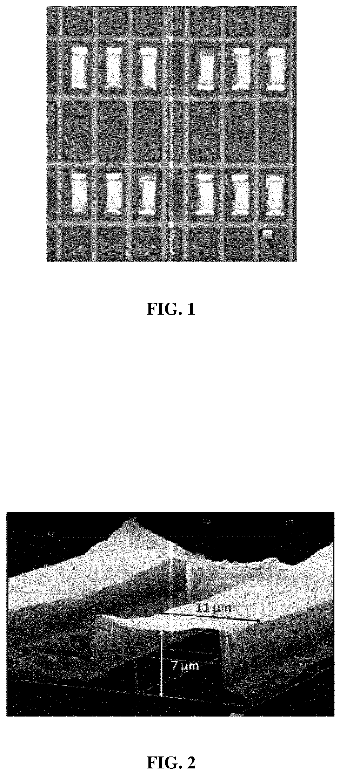

Application test: as shown in FIGS. 1 and 2, a ceramic printer head with an inner diameter of 10 µm is used in the embodiment, which may still print a line with a good height-width ratio at a printing speed of 70 mm/s, where specific values are as follows: a height is 7 µm and a width is 11 µm. The hardness of the cured material is tested by a Shore A durometer, which is 30.

### Embodiment 2: Preparation of single-component silica gel medium (viscosity of 500 Pa·s):

(1) 100 g of methylvinyl polysiloxane having a viscosity of 100 Pa·s, a vinyl content of 5 mol%, and a molecular weight of 100 * 10⁴, 0.5 g of Karstedt platinum catalyst, and 30 g of HO-Si(CH₃)₂O[Si(CH₃)₂O]₃Si(CH₃)₂-OH are added to a stirred tank to be mixed evenly;
(2) the mixture is heated to 70°C and reacts for 100 minutes, and 1 g of propargyl alcohol is added therein to be mixed evenly for a reaction for 50 minutes;
(3) the mixture is cooled to 30°C, 40 g of hydrogen-containing polysiloxane having a viscosity of 100 Pa·s, a hydrogen content of 0.5 mol%, and a molecular weight of 70 * 10⁴ is added to be mixed evenly with the mixture and stirred at a high speed for 60 minutes;
(4) 30 g of 100 nm titanium dioxide is added to be mixed evenly, and the mixture is transferred into a three-roller mill, and ground to a size smaller than 10 µm; and
(5) the ground mixture is transferred into the stirred tank for stirring at normal temperature and a vacuum degree smaller than 0.1 MPa for 2 hours, and is finally filtered under pressure to obtain a single-component silica gel medium having a viscosity of 500 Pa·s.

### Performance test:

The viscosity of the single-component silica gel medium is tested via a viscometer, which is 500 Pa·s. Cone penetrations for 30 days are tested using a cone penetrometer (25°C, and 0.1 mm), which are 178 (initial) and 180 (after 30 days) respectively. The material shows the excellent storage stability.

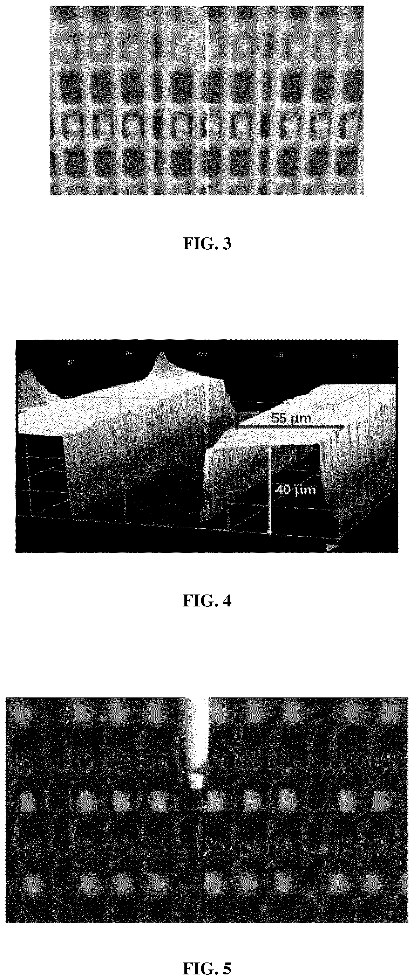

Application test: as shown in FIGS. 3 and 4, a ceramic printer head with an inner diameter of 50 µm is used in the embodiment, which may still print a line with a good height-width ratio at a printing speed of 70 mm/s, where specific values are as follows: a height is 40 µm and a width is 55 µm. The hardness of the cured material is tested by a Shore A durometer, which is 56.

### Embodiment 3: Preparation of single-component silica gel medium (viscosity of 1000 Pa·s):

(1) 100 g of methylphenylvinyl polysiloxane having a viscosity of 500 Pa·s, a vinyl content of 10 mol%, and a molecular weight of 70 * 10⁴, 1 g of Karstedt platinum catalyst, and 40 g of dimethylsiloxane cyclic mixture (DMC) are added to a stirred tank to be mixed evenly;
(2) the mixture is heated to 80°C and reacts for 180 minutes, and 4 g of 3-butyne-1-ol is added therein to be mixed evenly for a reaction for 180 minutes;
(3) the mixture is cooled to 30°C, 20 g of hydrogen-containing polysiloxane having a viscosity of 500 Pa·s, a hydrogen content of 1 mol%, and a molecular weight of 100 * 10⁴ is added to be mixed evenly with the mixture and stirred at a high speed for 60 minutes;
(4) 40 g of 10 to 20 nm carbon black is added to be mixed evenly, and the mixture is transferred into a planetary ball mill, and ground to a size smaller than 20 µm; and
(5) the ground mixture is transferred into the stirred tank for stirring at normal temperature and a vacuum degree smaller than 0.1 MPa for 2 hours, and is finally filtered under pressure to obtain a single-component silica gel medium having a viscosity of 1000 Pa·s.

### Performance test:

The viscosity of the single-component silica gel medium is tested via a viscometer, which is 1000 Pa·s. Cone penetrations for 30 days are tested using a cone penetrometer (25°C, and 0.1 mm), which are 120 (initial) and 119 (after 30 days) respectively. The material shows the excellent storage stability.

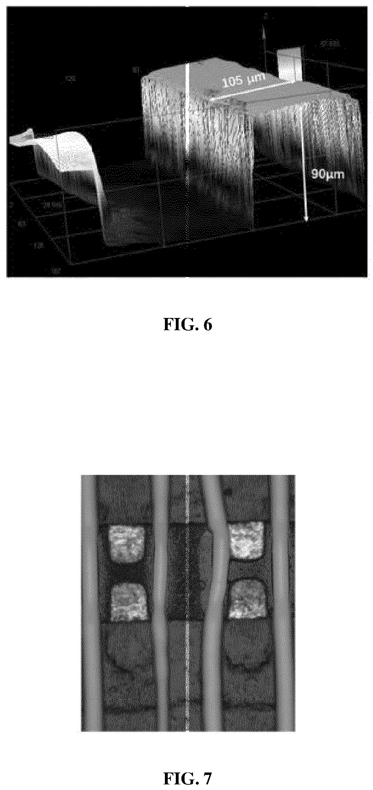

Application test: as shown in FIGS. 5 and 6, a ceramic printer head with an inner diameter of 100 µm is used in the embodiment, which may still print a line with a good height-width ratio at a printing speed of 70 mm/s, where specific values are as follows: a height is 90 µm and a width is 105 µm. The hardness of the cured material is tested by a Shore A durometer, which is 56.

Comparative Example 1: the usage amount is the same as that in Embodiment 1, and the method process is different therefrom in that:
(1) 100 g of vinyl polysiloxane having a viscosity of 50 Pa·s, a vinyl content of 0.05 mol% and a molecular weight of 40 * 10⁴, 0.2 g of Karstedt platinum catalyst, 20 g of hexamethylcyclotrisiloxane (D3), 0.2 g of 1-ethynyl-1-cyclohexanol, 60 g of hydrogen-containing polysiloxane having a viscosity of 50 Pa·s, a hydrogen content of 0.1 mol%, and a molecular weight of 40 * 10⁴, and 20 g of 20-30 nm hydrophobic fumed silica are mixed, and then, are transferred into a three-roller mill and ground to a size smaller than 5 µm; and
(2) the ground mixture is transferred into a stirred tank for stirring at normal temperature and a vacuum degree smaller than 0.1 MPa for 2 hours, and finally, is filtered under pressure to obtain a single-component silica gel medium having a viscosity of 200 Pa·s.

Without heating, all raw materials are mixed evenly and transferred into the three-roller mill for grinding.

### Final material performance:

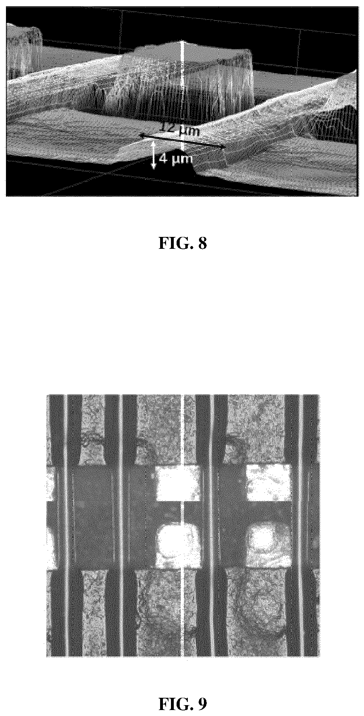

Material viscosity: 150 Pa·s. Cone penetrations for 30 days are tested using a cone penetrometer (25°C, and 0.1 mm), which are 308 (initial) and 158 (after 30 days) respectively. The material shows the increasing hardness and the poor storage stability after being stored for a long time. As shown in FIGS. 7 and 8, a ceramic printer head with an inner diameter of 10 µm is used in the comparative example, and a line printed at a printing speed of 70 mm/s has a poor shape retention, where specific values are as follows: a height is 4 µm and a width is 12 µm. The hardness of the cured material is tested by a Shore A durometer, which is 16.

The comparison between Comparative Example 1 and Embodiment 1 shows that according to the present disclosure, the single-component silica gel medium obtained by cross-linking the polysiloxane containing carbon-carbon double bonds with the tackifier under the induction of the catalyst, and then, adding the polymerization inhibitor has higher viscosity and higher stability at room temperature, and yields the better line width ratio when applied to 3D printing.

### Comparative Example 2:

The operation steps are the same as those in Embodiment 1, with the slight difference in that the tackifier of the hexamethylcyclotrisiloxane (D3) in step (1) is removed.

### Final material performance:

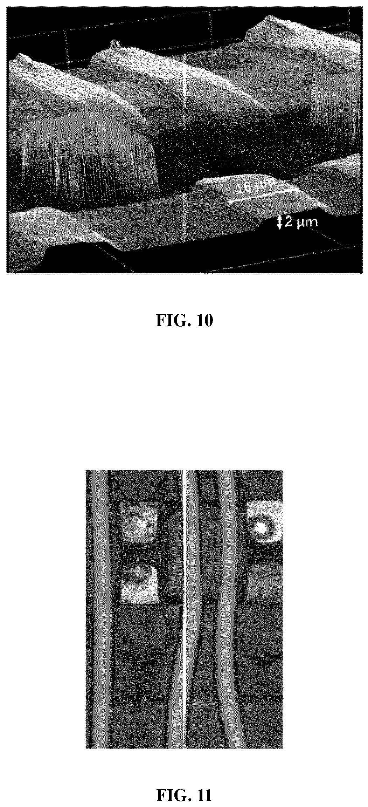

Material viscosity: 80 Pa·s. Cone penetrations for 30 days are tested using a cone penetrometer (25°C, and 0.1 mm), which are 356 (initial) and 268 (after 30 days) respectively. The material shows the increasing hardness and the poor storage stability after being stored for a long time. As shown in FIGS. 9 and 10, a ceramic printer head with an inner diameter of 10 µm is used in the comparative example, and a line printed at a printing speed of 70 mm/s has a poor shape retention, where specific values are as follows: a height is 2 µm and a width is 16 µm. The hardness of the cured material is tested by a Shore A durometer, which is 8.

The comparison between Comparative Example 2 and Embodiment 1 shows that according to the present disclosure, the polysiloxane containing carbon-carbon double bonds may be cross-linked to form the reticular cross-linked polymer under the assistance of the tackifier to further improve the stability of the single-component silica gel medium while boosting the viscosity thereof. In addition, the addition of the tackifier is also of great significance for the printed line width.

### Comparative Example 3:

The operation steps are the same as those in Embodiment 1, with the slight difference in that the polymerization inhibitor of the 1-ethynyl-1-cyclohexanol in step (2) is removed. Final material performance:

Material viscosity: 270 Pa·s. A cone penetration for 30 days is tested using a cone penetrometer (25°C, and 0.1 mm), which is 246 (initial) and 140 after 30 minutes, indicating the poor storage stability. The hardness of the cured material is tested by a Shore A durometer, which is 46.

### Comparative Example 4

The operation steps are the same as those in Embodiment 1, with the slight difference in that the Karstedt platinum catalyst in step (1) is removed.

Material viscosity: 80 Pa·s. Cone penetrations are tested using a cone penetrometer (25°C, and 0.1 mm), which are 428 (initial) and 430 (after 30 days). The material is stable after being stored for a long time. Due to no platinum catalyst, the material cannot be cured.

### Comparative Example 5

(1) 100 g of vinyl polysiloxane having a viscosity of 50 Pa·s, a vinyl content of 0.05 mol% and a molecular weight of 40 * 10⁴ and 0.2 g of Karstedt platinum catalyst are mixed evenly;
(2) the mixture is transferred into a three-roller mill and ground to a size smaller than 5 µm; and the ground mixture is transferred into a stirred tank for stirring at normal temperature and a vacuum degree smaller than 0.1 MPa for 2 hours, and is finally filtered under pressure to obtain a component A of single-component silica gel.
(3) 60 g of hydrogen-containing polysiloxane having a viscosity of 50 Pa·s, a hydrogen content of 0.1 mol%, and a molecular weight of 40 * 10⁴, 0.2 g of 1-ethynyl-1-cyclohexanol, and 20 g of 20-30 nm hydrophobic fumed silica are mixed evenly;
(4) the mixture is transferred into the three-roller mill and ground to a size smaller than 5 µm; and the ground mixture is transferred into the stirred tank for stirring at normal temperature and the vacuum degree smaller than 0.1 MPa for 2 hours, and finally, is filtered under pressure to obtain a component B of the single-component silica gel.

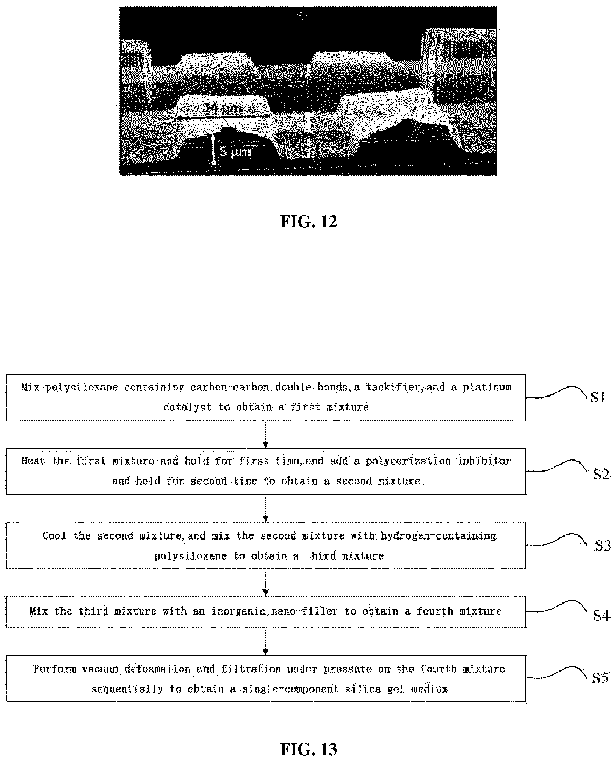

The component A and the component B of the single-component silica gel are mixed at a ratio of 1: 1. Cone penetrations are tested using a cone penetrometer (25°C, and 0.1 mm), which are 296 (initial) and 168 (after 12 hours), indicating the material has poor storage stability. As shown in FIGS. 11 and 12, a ceramic printer head with an inner diameter of 10 µm is used in the comparative example, and a line printed at a printing speed of 70 mm/s has a poor shape retention, where specific values are as follows: a height is 5 µm and a width is 14 µm. The hardness of the cured material is tested by a Shore A durometer, which is 24.

The performance tests of the single-component silica gel media in the above embodiments and Comparative Examples are summarized as follows:

| | Initial of cone penetration | Cone penetration after storage for 30 days | Storage stability | Aspect ratio of printed line | Hardness after curing |
|---|---|---|---|---|---|
| Embodiment 1 | 276 | 278 | ≥30 days | 0.64 | 30 |
| | | | No change in viscosity | | |
| Embodiment 2 | 178 | 180 | ≥30 days | 0.73 | 56 |
| | | | No change in viscosity | | |
| Embodiment 3 | 120 | 119 | ≥30 days | 0.86 | 85 |
| | | | No change in viscosity | | |
| Comparative Example 1 | 308 | 158 | Increasing viscosity within 30 days | 0.33 | 16 |
| Comparative Example 2 | 356 | 268 | Increasing viscosity within 30 days | 0.12 | 8 |
| Comparative Example 3 | 246 | 140^{a} | <30min | Incapability of smooth extrusion | 46 |
| Comparative Example 4 | 428 | 430 | ≥30 days | <0.1 | Incapability of curing |
| | | | No change in viscosity | | |
| Comparative Example 5 | 296 | 168^{b} | Increasing viscosity within 30 days | 0.36 | 24 |

| | | | | | |
|---|---|---|---|---|---|
| a: Test the material after storing it for 30 minutes. b: Test the material after storing it for 12 h. | | | | | |

The above table clearly shows that the dual-component silica gel medium materials of Embodiments 1 to 3 provided by the present disclosure have the excellent performance. The preparation method provided by the present disclosure is particularly advantageous.

## Claims

1. A preparation method of a single-component silica gel medium suitable for a direct ink writing 3D printing process, **characterized by** comprising the following steps:
S1: mixing polysiloxane containing carbon-carbon double bonds, a tackifier, and a platinum catalyst to obtain a first mixture;
S2: heating the first mixture and holding for first time, and adding a polymerization inhibitor and holding for second time to obtain a second mixture;
S3: cooling the second mixture, and mixing the second mixture with hydrogen-containing polysiloxane to obtain a third mixture;
S4: mixing the third mixture with an inorganic nano-filler to obtain a fourth mixture; and
S5: performing vacuum defoamation and filtration under pressure on the fourth mixture sequentially to obtain the single-component silica gel medium.

2. The preparation method of the single-component silica gel medium suitable for the direct ink writing 3D printing process according to claim 1, **characterized in that** the polysiloxane containing carbon-carbon double bonds is selected from at least one of vinyl polysiloxane, methylvinyl polysiloxane, and methylphenylvinyl polysiloxane.

3. The preparation method of the single-component silica gel medium suitable for the direct ink writing 3D printing process according to claim 1, **characterized in that** the hydrogen-containing polysiloxane is selected from at least one of hydrogen-containing methylpolysiloxane, hydrogen-containing methylphenylpolysiloxane, hydrogen-containing methyl silicone resin, and hydrogen-containing phenyl silicone resin.

4. The preparation method of the single-component silica gel medium suitable for the direct ink writing 3D printing process according to claim 1, **characterized in that** the platinum catalyst is prepared from chloroplatinic acid or at least one of complexes formed by the chloroplatinic acid and alkene, cycloalkane, alcohol, ester, ketone and ether.

5. The preparation method of the single-component silica gel medium suitable for the direct ink writing 3D printing process according to claim 1, **characterized in that** the tackifier is selected from one or more of HO-Si(CH₃)₂O[Si(CH₃)₂O]ₙSi(CH₃)₂-OH (n=3 to 8), hexamethylcyclotrisiloxane (D3), octamethyl cyclotetrasiloxane (D4), decamethylcyclopentasiloxane (D5), and a dimethylsiloxane cyclic mixture (DMC).

6. The preparation method of the single-component silica gel medium suitable for the direct ink writing 3D printing process according to claim 1, **characterized in that** the polymerization inhibitor is alkynol having less than 15 carbon atoms.

7. The preparation method of the single-component silica gel medium suitable for the direct ink writing 3D printing process according to claim 1, **characterized in that** in step S2, the first mixture is heated to 50°C to 80°C, and in step S3, the second mixture is cooled to 50°C below.

8. A single-component silica gel medium suitable for a direct ink writing 3D printing process, **characterized in that** it is prepared by the preparation method according to any of the claims 1 to 7.

9. Application of a single-component silica gel medium, **characterized in that** the single-component silica gel medium according to claim 8, suitable for the direct ink writing 3D printing process, is applied to direct ink writing 3D printing, with a printed line width ranging from 1 to 200 µm; the single-component silica gel medium being applicable to the printing of a line with a height-width ratio larger than 0.5.

## Patentansprüche

1. Herstellungsverfahren für ein einkomponentiges Kieselgelmedium, das für einen 3D-Druckprozess mit direktem Tintendruck geeignet ist, **dadurch gekennzeichnet, dass** es die folgenden Schritte umfasst:
S1: Mischen von polysiloxanhaltigen Kohlenstoff-Kohlenstoff-Doppelbindungen, einem Klebrigmacher und einem Platinkatalysator, um eine erste Mischung zu erhalten;
S2: Erhitzen der ersten Mischung und Halten über einen ersten Zeitraum und Zugeben eines Polymerisationsinhibitors und Halten über einen zweiten Zeitraum, um eine zweite Mischung zu erhalten;
S3: Kühlen der zweiten Mischung und Mischen der zweiten Mischung mit wasserstoffhaltigem Polysiloxan, um eine dritte Mischung zu erhalten;
S4: Mischen der dritten Mischung mit einem anorganischen Nano-Füllstoff, um eine vierte Mischung zu erhalten; und
S5: Durchführen einer Vakuumentschäumung und Filtration unter Druck an der vierten Mischung der Reihe nach, um das einkomponentige Kieselgelmedium zu erhalten.

2. Herstellungsverfahren für das einkomponentige Kieselgelmedium, das für einen 3D-Druckprozess mit direktem Tintendruck geeignet ist, nach Anspruch 1, **dadurch gekennzeichnet, dass** die polysiloxanhaltigen Kohlenstoff-Kohlenstoff-Doppelbindungen ausgewählt sind aus mindestens einem von Vinylpolysiloxan, Methylvinylpolysiloxan und Methylphenylvinylpolysiloxan.

3. Herstellungsverfahren für das einkomponentige Kieselgelmedium, das für einen 3D-Druckprozess mit direktem Tintendruck geeignet ist, nach Anspruch 1, **dadurch gekennzeichnet, dass** das wasserstoffhaltige Polysiloxan ausgewählt ist aus mindestens einem von wasserstoffhaltigem Methylpolysiloxan, wasserstoffhaltigem Methylphenylpolysiloxan, wasserstoffhaltigem Methylsilikonharz und wasserstoffhaltigem Phenylsilikonharz.

4. Herstellungsverfahren für das einkomponentige Kieselgelmedium, das für einen 3D-Druckprozess mit direktem Tintendruck geeignet ist, nach Anspruch 1, **dadurch gekennzeichnet, dass** der Platinkatalysator aus Chlorplatinsäure oder mindestens einem von Komplexen hergestellt wird, die durch Chlorplatinsäure und Alken, Cycloalkan, Alkohol, Ester, Keton und Ether gebildet werden.

5. Herstellungsverfahren für das einkomponentige Kieselgelmedium, das für einen 3D-Druckprozess mit direktem Tintendruck geeignet ist, nach Anspruch 1, **dadurch gekennzeichnet, dass** der Klebrigmacher ausgewählt ist aus einem oder mehreren von HO-Si(CH₃)₂O[Si(CH ₃)₂O]ₙSi(CH₃)₂-OH (n=3 bis 8), Hexamethylcyclotrisiloxan (D3), Octamethylcyclotetrasiloxan (D4), Decamethylcyclopentasiloxan (D5) und einer zyklischen Dimethylsiloxanmischung (DMC).

6. Herstellungsverfahren für das einkomponentige Kieselgelmedium, das für einen 3D-Druckprozess mit direktem Tintendruck geeignet ist, nach Anspruch 1, **dadurch gekennzeichnet, dass** der Polymerisationsinhibitor Alkynol mit weniger als 15 Kohlenstoffatomen ist.

7. Herstellungsverfahren für das einkomponentige Kieselgelmedium, das für einen 3D-Druckprozess mit direktem Tintendruck geeignet ist, nach Anspruch 1, **dadurch gekennzeichnet, dass** in Schritt S2 die erste Mischung auf 50 °C bis 80 °C erhitzt wird und in Schritt S3 die zweite Mischung auf unter 50 °C gekühlt wird.

8. Einkomponentiges Kieselgel das für einen 3D-Druckprozess mit direktem Tintendruck geeignet ist, **dadurch gekennzeichnet, dass** es durch das Herstellungsverfahren nach einem der Ansprüche 1 bis 7 hergestellt wird.

9. Anwendung eines einkomponentigen Kieselgelmediums, **dadurch gekennzeichnet, dass** das einkomponentige Kieselgelmedium nach Anspruch 8, das für einen 3D-Druckprozess mit direktem Tintendruck geeignet ist, bei 3D-Drucken mit direktem Tintendruck angewendet wird, wobei eine gedruckte Zeilenbreite von 1 bis 200 µm reicht; wobei das einkomponentige Kieselgelmedium für den Druck einer Zeile mit einem Höhe-Breite-Verhältnis von größer als 0,5 anwendbar ist.

## Revendications

1. Procédé de préparation d'un milieu de gel de silice monocomposant adapté à un processus d'impression 3D par écriture directe à l'encre, **caractérisé en ce qu'**il comprend les étapes suivantes :
S1 : mélange de polysiloxane contenant des doubles liaisons carbone-carbone, un agent poisseux, et un catalyseur au platine pour obtenir un premier mélange ;
S2 : chauffage du premier mélange et maintien pour une première fois, et ajout d'un inhibiteur de polymérisation et maintien pour une seconde fois pour obtenir un deuxième mélange ;
S3 : refroidissement du deuxième mélange, et mélange du deuxième mélange avec du polysiloxane contenant de l'hydrogène pour obtenir un troisième mélange ;
S4 : mélange du troisième mélange avec une nano-charge inorganique pour obtenir un quatrième mélange ; et
S5 : réalisation d'un démoussage sous vide et d'une filtration sous pression sur le quatrième mélange séquentiellement pour obtenir le milieu de gel de silice monocomposant.

2. Procédé de préparation du milieu de gel de silice monocomposant adapté au processus d'impression 3D par écriture directe à l'encre selon la revendication 1, **caractérisé en ce que** le polysiloxane contenant des doubles liaisons carbone-carbone est choisi parmi au moins l'un parmi du polysiloxane de vinyle, du polysiloxane de méthylvinyle, et du polysiloxane de méthylphénylvinyle.

3. Procédé de préparation du milieu de gel de silice monocomposant adapté au processus d'impression 3D par écriture directe à l'encre selon la revendication 1, **caractérisé en ce que** le polysiloxane contenant de l'hydrogène est choisi parmi au moins l'un parmi du méthylpolysiloxane contenant de l'hydrogène, du méthylphénylpolysiloxane contenant de l'hydrogène, de la résine de silicone méthyle contenant de l'hydrogène, et de la résine de silicone phényl contenant de l'hydrogène.

4. Procédé de préparation du milieu de gel de silice monocomposant adapté au processus d'impression 3D par écriture directe à l'encre selon la revendication 1, **caractérisé en ce que** le catalyseur de platine est préparé à partir d'acide chloroplatinique ou au moins l'un parmi un complexe formé par de l'acide chloroplatinique et de l'alcène, du cycloalcane, de l'alcool, de l'ester, de la cétone et de l'éther.

5. Procédé de préparation du milieu de gel de silice monocomposant adapté au processus d'impression 3D par écriture directe à l'encre selon la revendication 1, **caractérisé en ce que** l'agent poisseux est choisi parmi un ou plusieurs de HO-Si(CH₃)₂O[Si(CH₃)₂O]ₙSi(CH₃)₂-OH(n=3 à 8), d'hexaméthylcyclotrisiloxane (D3), d'octaméthylcyclotétrasiloxane (D4), de décaméthylcyclopentasiloxane (D5), et d'un mélange cyclique de diméthylsiloxane (DMC).

6. Procédé de préparation du milieu de gel de silice monocomposant adapté au processus d'impression 3D par écriture directe à l'encre selon la revendication 1, **caractérisé en ce que** l'inhibiteur de polymérisation est de l'alcynol ayant moins de 15 atomes de carbone.

7. Procédé de préparation du milieu de gel de silice monocomposant adapté au processus d'impression 3D par écriture directe à l'encre selon la revendication 1, **caractérisé en ce que**, à l'étape S2, le premier mélange est chauffé de 50 °C à 80 °C, et à l'étape S3, le deuxième mélange est refroidi à moins de 50 °C.

8. Milieu de gel de silice monocomposant adapté à un processus d'impression 3D par écriture directe à l'encre, **caractérisé en ce qu'**il est préparé par le procédé de préparation selon l'une quelconque des revendications 1 à 7.

9. Application d'un milieu de gel de silice monocomposant, **caractérisé en ce que** le milieu de gel de silice monocomposant selon la revendication 8, adapté au processus d'impression 3D par écriture directe à l'encre, est appliqué à une impression 3D par écriture directe à l'encre, avec une largeur de ligne imprimée allant de 1 à 200 µm ; le milieu de gel de silice monocomposant étant applicable à l'impression d'une ligne avec un rapport hauteur/largeur supérieur à 0,5.
